# EUROPEAN PATENT APPLICATION

(11) **EP 4 492 040 A1**
(43) Date of publication of application: **15.01.2025**
(21) Application number: 24188170.5
(22) Date of filing: 12.07.2024
(51) Int. Cl.: G01N 21/3504, G01N 21/61

(54) **OPTICAL GAS SENSOR DEVICE AND MANUFACTURING METHOD OF OPTICAL GAS SENSOR DEVICE**

(30) Priority: 14.07.2023 JP 2023115955
(71) Applicant: MITSUMI ELECTRIC CO., LTD., Tama-Shi, Tokyo 206-8567 (JP)
(72) Inventor: Nakane, Taketomo, TOKYO, 206-8567 (JP); TAKAHASHI, Akira, TOKYO, 206-8567 (JP)
(74) Representative: Epping - Hermann - Fischer

(57) **Abstract**

Disclosed is an optical gas sensor device (100a, 100b, 100c) that includes: a light source (2) that emits infrared rays to a gas (G) as a detection target; an optical filter (31, 32) that transmits the infrared rays; a light receiver (4) that detects infrared rays incident via the optical filter (31, 32) and generates a detection signal; and a first substrate (6), the optical gas sensor device (100a, 100b, 100c) including a seal (20a, 20b, 20c; 40a, 40b, 40c) in which the optical filter (31, 32) is installed and which seals the light source (2) or the light receiver (4). The seal (20a, 20b, 20c; 40a, 40b, 40c) is mounted on the first substrate (6).

## Description

### TECHNICAL FIELD

The present disclosure relates to an optical gas sensor device and a manufacturing method of an optical gas sensor device.

### DESCRIPTION OF RELATED ART

In the past, gas concentrations have been constantly observed from the viewpoint of management and worker safety related to chemical substances in homes, factories, and business establishments. Non-dispersive infrared absorption (NDIR: Non Dispersive InfraRed) gas sensors are known to detect the concentration of gases such as CO₂ in the observation of gas concentrations. NDIR gas sensors utilize the property of many gases to absorb their own specific infrared wavelengths, and when infrared rays is emitted to a gas as a detection target, the sensor detects which wavelengths are absorbed and by how much, to measure the concentration in the gas as a detection target. For example, it is a gas sensor that includes an infrared rays light source and a light receiver and detects the concentration of the detected gas in the light path of the light source and the light receiver.

Also known is a light-absorbing gas sensor that includes a light-emitting diode, an annular radiation guide that guides near-infrared rays emitted from the light-emitting diode, and a photodiode that detects the guided near-infrared rays (see JP 2013-517467 A). The light emitting diode as a light source and the photodiode as a light receiver are mounted on a printed circuit board.

However, the above light-absorbing gas sensor is installed on a printed circuit board with the light source and the light receiver exposed. In the exposed light source and the light receiver, it was found that the external environment (humidity, temperature, and air pressure) has a significant effect. The light amount of the light source mainly changes due to the external environment.

As an example, the case where the light source and the light receiver are composed of MEMS (Micro Electro Mechanical Systems) and the air pressure is lowered is explained. A decrease in air pressure means that the number of molecules in the air that collide with the heater surface of the light source is reduced, so that less heat is lost from the heater. A vacuum would result in a state of thermal insulation, like that of a so-called thermos. Thus, if the air pressure drops, when the same energy is applied to the light source, the temperature at the heater surface will increase because less heat is lost to the molecules in the air.

When the light source is exposed, as described above, the light amount at the infrared region will differ depending on the environment of the type, temperature, and pressure of the gas molecules that come in contact with the heater surface. In this configuration, unless the parameters of the environment are obtained and feedback is applied, the light emission intensity will be different from the factory-corrected value, resulting in a larger error and gas concentration deviating from the actual value. In the case of gas sensor modules that have a function to alert with a threshold value, there is a risk of false alarms. Here, the phenomenon for light sources has been shown, but the same phenomenon also exists for light receivers.

### SUMMARY OF THE INVENTION

An object of the present disclosure is to reduce the effects of the external environment on at least one of the light sources and the light receivers.

To achieve at least one of the abovementioned objects, according to an aspect of the present disclosure, there is provided an optical gas sensor device that includes: a light source that emits infrared rays to a gas as a detection target; an optical filter that transmits the infrared rays; a light receiver that detects infrared rays incident via the optical filter and generates a detection signal; and a first substrate, the optical gas sensor device including a seal in which the optical filter is installed and which seals the light source or the light receiver, wherein the seal is mounted on the first substrate.

To achieve at least one of the abovementioned objects, according to an aspect of the present disclosure, there is provided a manufacturing method of an optical gas sensor device that includes: a light source that emits infrared rays to a gas as a detection target; an optical filter that transmits the infrared rays; a light receiver that detects infrared rays incident via the optical filter and generates a detection signal; and a first substrate, the method including: first mounting that is mounting the light source and the light receiver on the first substrate; and second mounting that is mounting, on the first substrate, a seal in which the optical filter is installed and which seals the light source or the light receiver, wherein in the second mounting, a first protective cover that surrounds a side surface of the light source or the light receiver and includes a vent leading to a space of the light source or the light receiver is mounted on the first substrate, the optical filter is installed in an opening of an upper surface of the first protective cover to create the seal, and the vent is blocked with an adhesive after heat treatment of mounting of the light source, the light receiver and a circuit component on the first substrate.

To achieve at least one of the abovementioned objects, according to an aspect of the present disclosure, there is provided a manufacturing method of an optical gas sensor device that includes: a light source that emits infrared rays to a gas as a detection target; an optical filter that transmits the infrared rays; a light receiver that detects infrared rays incident via the optical filter and generates a detection signal; and a first substrate, the method including: first mounting that is mounting the light source or the light receiver on a second substrate; and second mounting that is mounting, on the first substrate, a seal in which the optical filter is installed and which seals the light source or the light receiver, wherein in the second mounting, a first protective cover that surrounds a side surface of the light source or the light receiver and includes a vent leading to a space of the light source or the light receiver is mounted on the second substrate, the optical filter is installed in an opening of an upper surface of the first protective cover to create the seal, and the vent is blocked with an adhesive after heat treatment of mounting of the seal and a circuit component on the first substrate.

To achieve at least one of the abovementioned objects, according to an aspect of the present disclosure, there is provided a manufacturing method of an optical gas sensor device that includes: a light source that emits infrared rays to a gas as a detection target; an optical filter that transmits the infrared rays; a light receiver that detects infrared rays incident via the optical filter and generates a detection signal; and a first substrate, the method including: first mounting that is mounting the light source or the light receiver on a second protective cover that surrounds a side surface and a bottom surface of the light source or the light receiver; creating that is installing the optical filter into the second protective cover to create a seal that seals the light source or the light receiver; and second mounting that is mounting the seal on the first substrate, wherein in the creating, air decompression is performed and the optical filter is installed into the second protective cover in decompressed air.

To achieve at least one of the abovementioned objects, according to an aspect of the present disclosure, there is provided a manufacturing method of an optical gas sensor device that includes: a light source that emits infrared rays to a gas as a detection target; an optical filter that transmits the infrared rays; a light receiver that detects infrared rays incident via the optical filter and generates a detection signal; and a first substrate, the method including: first mounting that is mounting the light source or the light receiver on a second protective cover that surrounds a side surface and a bottom surface of the light source or the light receiver; creating that is installing the optical filter into the second protective cover to create a seal that seals the light source or the light receiver; and second mounting that is mounting the seal on the first substrate, wherein in the creating, the optical filter is installed into the second protective cover at 100°C or higher.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a schematic diagram of an optical gas sensor device of the first embodiment of the present disclosure;
FIG. 2 shows a view of a diagram of the optical gas sensor device;
FIG. 3 shows a partially transparent view of the optical gas sensor device;
FIG. 4A is a view of a seal of the first embodiment;
FIG. 4B is a cross-sectional view of the seal of the first embodiment;
FIG. 5 shows an exploded view of the seal of the first embodiment;
FIG. 6 is a flow diagram showing the manufacturing method of the optical gas sensor device of the first embodiment;
FIG. 7 shows the amount of change in amount of light received during gas detection in the optical gas sensor device of a comparative example, the optical gas sensor device of the first embodiment, and the optical gas sensor device of the third embodiment;
FIG. 8 shows a view of a seal of the second embodiment;
FIG. 9 is a flow diagram showing the manufacturing method of the optical gas sensor device of the second embodiment;
FIG. 10 is a flow diagram showing the seal creating process of FIG. 9;
FIG. 11A is a view showing a seal of the third embodiment;
FIG. 11B is a cross-sectional view showing the seal of the third embodiment;
FIG. 12 shows a cross-sectional view of a seal of a modification example;
FIG. 13 shows a cross-sectional view of a seal of a modification example; and
FIG. 14 shows the absorption wavelengths of various gases and the transmittable range of sapphire glass/Si.

### DETAILED DESCRIPTION

Hereinafter, one or more embodiments of the present invention will be described with reference to the drawings. However, the scope of the present invention is not limited to the disclosed embodiments.

The first through third embodiments and modification examples pertaining to the present disclosure will be described in detail in turn with reference to the accompanying drawings. However, the scope of the invention is not limited to the illustrated examples.

### (First Embodiment)

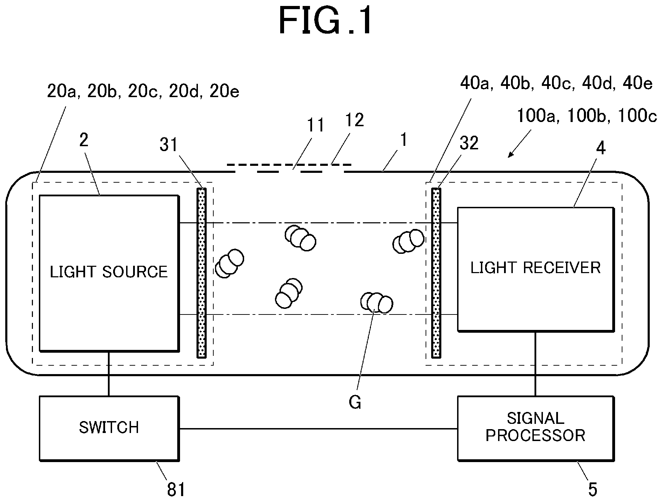

Referring to FIGS. 1 through 7, the first embodiment of the present disclosure is described. First, with reference to FIG. 1, a schematic configuration of an optical gas sensor device 100a of the present embodiment is described. FIG. 1 is a schematic diagram of the optical gas sensor device 100a of the present embodiment.

As shown in FIG. 1, the optical gas sensor device 100a of the present embodiment is an NDIR gas sensor. The optical gas sensor device 100a includes an optical cover 1, a light source 2, an AR (Anti Reflection) filter 31, a λ (wavelength) selection filter 32, a light receiver 4, a signal processor 5, and a switch 81. The AR filter 31 and the λ selection filter 32 are optical filters. In the optical gas sensor device 100a, the light source 2 radiates (emits, emits light of) infrared rays. The radiated infrared rays are emitted to a gas G as a detection target (measurement target) inside the optical cover 1 via optical path (path) inside the optical cover 1 and the AR filter 31. The AR filter 31 is a filter that prevents the reflection of infrared rays and transmits them.

The molecules of the gas G as the detection target present in the light path absorb infrared rays, which reduces the amount of light reaching the light receiver 4. The optical gas sensor device 100a detects the infrared rays partially absorbed by the gas G as the detection target by the light receiver 4 through the λ selection filter 32. The λ selection filter 32 is a filter that transmits the infrared rays of the absorption wavelength of the gas G from the incident infrared rays. This configuration prevents the light receiver 4 from receiving light of pre-filtered infrared rays emitted from sources other than the light source 2, improving the signal-to-noise ratio (SN ratio) as a sensor.

The optical gas sensor device 100a detects (measures) and outputs the concentration of the gas G as the detection target by signal processing the detection signal detected by the light receiver 4 by the signal processor 5. The switch 81 is a switch that turns on/off the light emission of the light source 2 and is included in a circuit element 8, which is described below. The signal processor 5 turns on/off the light source 2 via the switch 81 when performing gas detection.

The optical cover 1 has a gas inlet port 11 as a gas inlet part, which is a port for leading the gas G as the detection target in and out. A contamination filter 12 is affixed to the gas inlet port 11. The contamination filter 12 is, for example, a metal mesh filter or a porous film made of resin to prevent foreign matter from entering from the outside.

Thus, the optical gas sensor device 100a receives the infrared rays emitted from the light source 2 onto the gas G as the detection target by the light receiver 4 after filtering it with the AR filter 31 and the λ selection filter 32. The AR filter 31 is located at a position near the light source 2 in the optical path downstream of the light source 2. The λ selection filter 32 is located in the optical path upstream of the light receiver 4 and in the vicinity of the light receiver 4.

However, it may be configured to place the AR filter 31 at a position near the light receiver 4 on the optical path upstream of the light receiver 4. In this configuration, the λ selection filter 32 may be configured to be placed at a position near the light source 2 on the optical path downstream of the light source 2.

In the present embodiment, the light path is designed so that the infrared rays received by the light receiver 4 arrives from the light source 2 by reflecting off the inner surface of the optical cover 1. It is desirable for the inner surface of the optical cover 1 to have a high reflectivity to increase the efficiency of light (infrared rays) utilization. The light path of the infrared rays received by the light receiver 4 may include not only the light path that reflects off the inner surface of the optical cover 1, but also the light path that arrives directly from the light source 2.

In the present embodiment, the light source 2 and the AR filter 31 are packaged as one component, a seal 20a, described below. The λ selection filter 32 and the light receiver 4 are packaged as one component, a seal 40a, described below.

The optical gas sensor device 100a detects an alternative CFC refrigerant, which is a refrigerant for air conditioners, as the gas G as the detection target. Alternative CFCs are synthetic compound (gas) refrigerants that are industrially used as substitutes for specific CFCs (chlorofluorocarbons, abbreviated as CFC). CFC refrigerants have a high ozone depletion potential and cause depletion of the earth's ozone layer, so they have started to be replaced by hydrochlorofluorocarbon (HCFC) refrigerants with low ozone depletion potential. In addition, developed countries are converting from HCFC refrigerants to HFC refrigerants (R410A), which have zero ozone depletion potential.

CFC refrigerants, HCFC refrigerants, and HFC refrigerants have high global warming potentials and are known to cause global warming as greenhouse gases. Therefore, replacement of HFC refrigerant (R410A) with HFC refrigerant (R32), which has a lower global warming potential, is being considered. In the present embodiment, for example, R32 as a CFC refrigerant is detected as the gas G as the detection target.

The optical gas sensor device 100a outputs various status signals based on the detected gas concentration value of the gas G to an information processor of equipment that performs processing based on the status of the optical gas sensor device 100a. The information processor is, for example, a micro controller unit (MCU). The status signals are, for example, a failure signal, an alarm signal, and a monitoring signal (normal signal). The failure signal indicates the failure status of the optical gas sensor device 100a. The alarm signal indicates that the concentration of the detected gas G is in an abnormal state (alarm state) that requires an alarm. The monitoring signal indicates that the concentration of the detected gas G is in a normal state. When the equipment is an alarm, it informs various alarms (for example, an alarm of a failure of the optical gas sensor device 100a based on a failure signal, an alarm of an abnormality in the concentration of the detected gas G based on an alarm signal) according to various signals received from the optical gas sensor device 100a. The equipment may be equipment including the optical gas sensor device 100a and the MCU, or it may be separate equipment from the optical gas sensor device 100a. The above equipment includes room air conditioners, air conditioners for stores and offices, and multi air conditioners for buildings.

However, the gas G as the detection target is not limited to R32 but may be any other CFC refrigerant. Furthermore, the gas G as the detection target is not limited to CFC refrigerants, but may be carbon dioxide, carbon monoxide, propane, methane, butane, ammonia, oxygen disulfide, nitrogen dioxide, nitrogen monoxide, ozone, sulfur hexafluoride, ethylene, and the like.

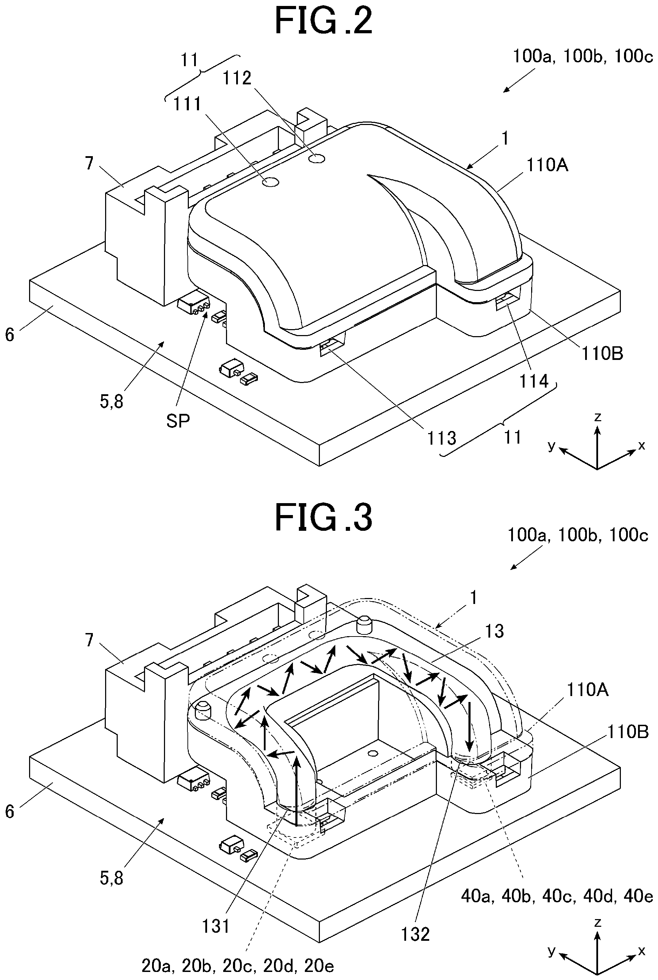

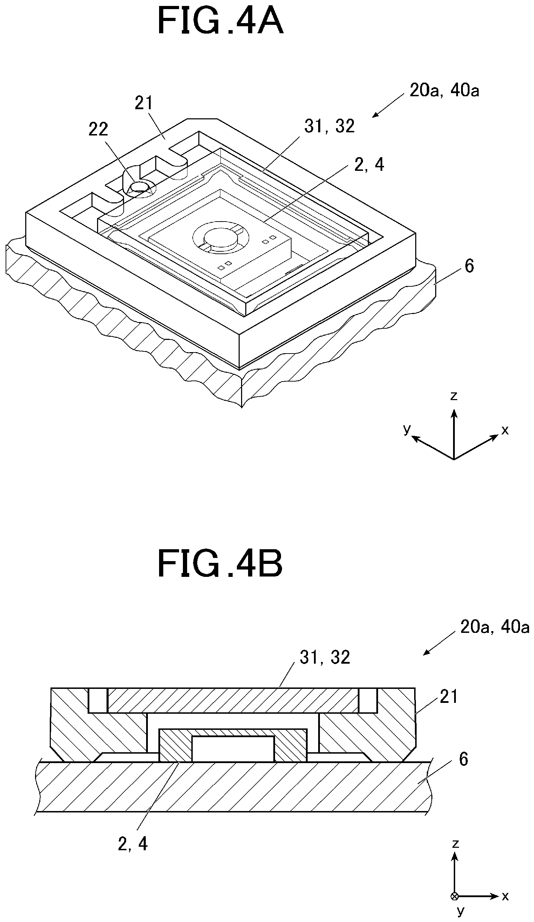

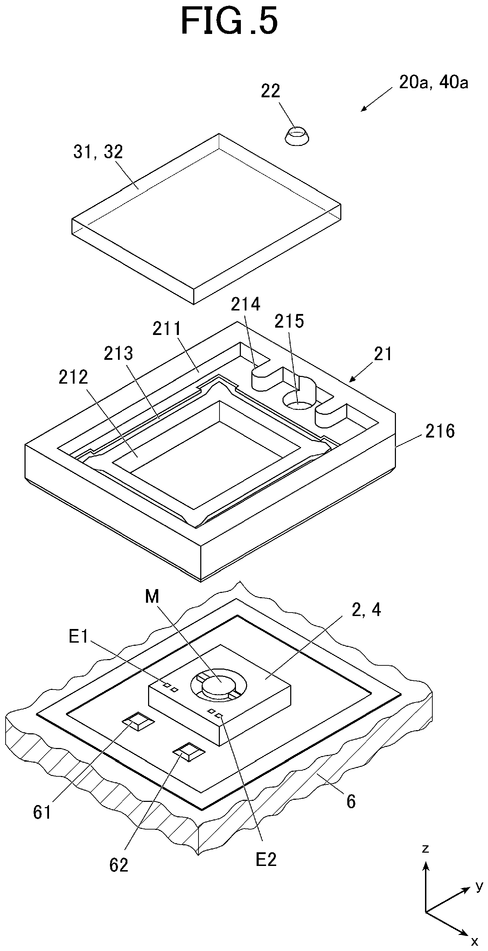

The specific device configuration of the optical gas sensor device 100a is now described with reference to FIGS. 2 through 5. FIG. 2 is a diagram of the optical gas sensor device 100a. FIG. 3 is a partially transparent view of the optical gas sensor device 100a. FIG. 4A is a diagram of the seal 20a. FIG. 4B is a cross-sectional view of the seal 20a. FIG. 5 is an exploded view of the seal 20a.

As shown in FIGS. 2 and 3, the optical gas sensor device 100a includes the optical cover 1, the seals 20a and 40a, the signal processor 5, a substrate 6, a connector 7 and the circuit element 8. The seal 20a has the light source 2 and the AR filter 31. The seal 40a has the λ selection filter 32 and the light receiver 4. The x-axis, y-axis, and z-axis are illustrated in FIG. 2. These three axes are the same in the other figures. In FIGS. 2 and 3, the contamination filter 12 is not shown.

The optical cover 1 is a cover mounted on the surface on +z side of the substrate 6, covering (encompassing) the seals 20a and 40a, forming a cavity (space) inside which the gas G as the detection target can be contained, and the gas G as the detection target is led into and out of the cavity via the gas inlet port 11. The base of the optical cover 1 is made of resin, for example.

As shown in FIG. 2, the optical cover 1 has covers 110A and 110B. The cover 110A which is the upper side (+z direction side) part and the cover 110B which is the lower side (-z direction side) part are attached to each other and integrated by adhesion, heat caulking, or other methods.

As shown in FIG. 3, the optical cover 1 has a light guide 13 as a cavity into which the gas G as the detection target is introduced. The light guide 13 is a pipe-shaped light path and has a circular cross-section perpendicular to the axis direction. The cover 110A has a half pipe. The cover 110B has a half pipe. The half pipes of the covers 110A and 110B are combined to form the light guide 13. Thus, the optical cover 1 has the covers 110A and 110B divided by the axial cross section of the light guide 13. As shown in FIG. 3, the light guide 13 has a three-dimensional, abbreviated U-shape when viewed from the upper surface (+z directional surface).

The inner surface of the light guide 13 is covered with an infrared reflective film. Gold is used as the infrared reflective film in the present embodiment, but it is not limited to this. Silver or aluminum may also be used as the infrared reflective film. In addition, a protective film such as silicon oxide or silicon nitride may be deposited on the infrared reflective film to prevent corrosion of the metallic film of the infrared reflective film, if necessary. Plating, sputtering, and vacuum evaporation methods can be used to deposit the infrared reflective film and protective film. For example, the optical cover 1 may be made of a single piece of metal such as aluminum using a metal 3D printer. In either case, it is preferable that the inner surface of the light guide 13 has a mirror finish to reflect infrared rays efficiently.

The light guide 13 reflects the infrared rays emitted from the light source 2 of the seal 20a and incident through the AR filter 31 with an infrared reflective film on its inner surface. The light guide 13 emits the reflected infrared rays to the light receiver 4 through the λ selection filter 32 of the seal 40a. In this way, the optical cover 1 plays the role of efficiently guiding the infrared rays emitted from the light source 2 to the light receiver 4 as a light path so that at least part of the reflected light reaches the light receiver 4 through the λ selection filter 32 by reflecting the infrared rays emitted from the light source 2 by the infrared reflection film.

In the present embodiment, the light path inside the optical cover 1 is the light guide 13 in the form of a pipe with a circular cross section, which keeps the reflection angle of infrared rays constant in any direction in three dimensions (x-, y-, and z-axes), regardless of the diameter or path of the cross section of the light guide 13, so that infrared rays from the light source 2 reflect inside the light guide 13 and efficiently enter the light receiver 4. The axial cross section of the light path of the light guide 13 of the optical cover 1 may be configured to be elliptical.

The length of the infrared ray path from the light source 2 to the light receiver 4 can be changed relatively easily by changing the diameter of the cross-section of the light guide 13.

As shown in FIGS. 2 and 3, the optical cover 1 is designed and formed in three dimensions so that a space SP is created on the substrate 6 below (-z direction) a portion of the light guide 13 with the axis direction being the x-axis direction. In the space SP, at least a part of the signal processor 5 and the circuit element 8 are arranged and mounted on the substrate 6.

The area extent of the cross section perpendicular to the axis direction of the light guide 13 is constant in the axis direction for the main part (other than an entrance 131 and an exit 132 described below). Since the area extent of the cross section is constant, the gas concentration per unit volume is easily homogenized for the gas G as the detection target entering the light guide 13, and since infrared rays do not pass through a specific path but pass randomly, it is easy to react to changes in the gas concentration of the gas G. FIG. 3 shows the state of light path propagation, with a plurality of light paths of infrared rays in the light guide 13 represented by solid arrows. As shown, the infrared ray paths are random within the light guide 13.

The infrared rays emitted from the light source 2 is incident on the light guide 13 on the -x direction side through the AR filter 31. The light guide 13 on the -x direction side has an axis direction extending from the -z direction side to the +z direction side, then bends in an R shape and extends straight from the -y direction side to the +y direction side. The end of the light guide 13 on the incident side of infrared rays is the entrance 131. The light guide 13 extending in the +y direction side is bent in an R shape, the axis direction extends from the -x direction side to the +x direction side and is bent in an R shape again.

The light guide 13 on the +x direction side has the axis direction extending in a straight line from the +y direction side to the -y direction side, then bends in an R shape and extends to the -z direction side. Infrared rays passing through the light guide 13 are emitted to the λ selection filter 32 and the light receiver 4. The end of the light guide 13 on the infrared ray emitting side is the exit 132.

The exit 132 has a tapered shape where the area extent of the cross section becomes smaller as the axis direction of the light guide 13 moves from the +z direction side to the -z direction side. Similarly, the entrance 131 has a tapered shape where the area extent of the cross section becomes smaller as the axis direction of the light guide 13 moves from the +z direction side to the -z direction side. This allows for increased light collection of infrared rays radiated through the light guide 13 to the light receiver 4.

The covers 110A and 110B have hollow sections (not shown) as a space for meat removal (meat stealing). These hollow sections enable the optical cover 1 (the optical gas sensor device 100a) to be lightweight.

The cover 110B has a fixing pin (not shown). The fixing pin is a convex portion extending in the +z direction and is attached to a concave portion (female hole) (not shown) of the cover 110A and integrated by bonding, heat caulking, or other methods. By attaching the fixing pin to the concave portion of the cover 110A and integrating by bonding, heat caulking, or other methods, the covers 110A and 110B are positioned and fixed together to form a single component.

As shown in FIG. 2, the cover 110A has gas intake ports 111 and 112 as the gas inlet ports 11. The cover 110B has gas intake ports (gas inlet holes) 113 and 114 as the gas inlet ports 11. The gas intake ports 111 and 112 are holes drilled in the -z direction from the upper surface of the cover 110A and penetrated to the light guide 13. The gas intake port 113 is a hole drilled from the -y direction side surface of the cover 110B in the +y direction and penetrated to the space around (beside) the seal 20a. The space around the light source 2 is conductive to the light guide 13. The gas intake port 114 is a hole drilled from the -y direction side surface of the cover 110B in the +y direction and penetrated to the space around (beside) the seal 40a. The space around the seal 40a is conductive to the light guide 13.

The gas intake ports 111 and 112 are directly conductive to the light guide 13 and remove part of the inner surface of the light guide 13, resulting in less efficient utilization of infrared rays. In contrast, the gas intake port 113 conducts indirectly to the light guide 13 through the space around the seal 20a, so it does not ruin (remove) part of the inner surface of the light guide 13, resulting in high efficient utilization of infrared rays. Similarly, the gas intake port 114 is indirectly conductive to the light guide 13 through the space around the seal 40a, thereby increasing the efficiency of infrared rays' utilization without ruining (removing) part of the inner surface of the light guide 13.

The shape, size and position of the gas inlet ports 11 (gas intake ports 111, 112, 113 and 114) of the optical cover 1 in FIG. 2 are examples and are not limited to them.

As shown in FIGS. 4A and 4B, the seal 20a is mounted on the substrate 6 and tightly closes and seals the light source 2 and the mounting region of the light source 2 to the substrate 6. The seal 20a protects the light source 2 and the mounting region from the external environment. The external environment is the humidity outside of the seal 20a, the environmentally affected gases, and the like. The seal 20a has the light source 2, a protective cover 21, an adhesive 22 and the AR filter 31.

The light source 2 is a surface-mount component, a MEMS-type light source mounted on the upper surface (+z side surface) of the substrate 6. As shown in FIG. 5, the light source 2 has a membrane structure membrane M, electrodes E1 and E2.

The light source 2, as a membrane on a Si substrate, has a composition of, for example, a light source layer support layer, a light source layer, an electrode support layer, and a protection layer (none of them shown) stacked from the -z direction side to the +z direction side. The light source layer support layer has, for example, a silicon oxide film, silicon nitride film, and HLD (high temperature low pressure dielectric layer) layer from the -z direction side to the +z direction side. The light source layer is a thin-film heater as a light source (metal) layer (light emitting layer) that radiates infrared rays and consists of, for example, MoSi₂. The light source layer is heated by the membrane when energized and radiates infrared rays with intensity and wavelength dependence on surface temperature and surface emissivity. The electrode support layer has two layers of insulators, for example, from the -z direction side to the +z direction side and supports the electrode. The protective layer is a protective layer of the upper surface composed of insulators.

The light source layer is electrically connected to the electrodes E1, E2 of the light source 2. The exposed portions of the electrodes E1 and E2 are wire-bonded to electrode pads 61 and 62 (FIG. 5) on the substrate 6, and the light source layer is energized by the application of voltage. The light source layer emits infrared rays when energized.

The light source 2 as a MEMS-type light source is small and low profile and can achieve miniaturization as a sensor module. The light source 2 as a MEMS-type light source is characterized by long life, low power consumption, and short response time, and can achieve low power consumption of the sensor module as a whole. The short response time of the MEMS-type light source enables a shorter standby time after energizing in case of intermittent driving and reduces the average power consumption.

The light source 2 as a MEMS-type light source can directly utilize the light radiated from the surface of the high-temperature part, which enables its application to the detection of the gas G with absorption bands at high wavelengths. In addition, the regions that radiate infrared rays in the light source 2 are patterned with high precision on the plane of the Si substrate of the membrane, and individual variations in the radiation direction are very small. This reduces the variation in the amount of light received when a sensor module is configured with the light source 2 and contributes to improved product yield. In addition, since the light source 2 is produced by batch using MEMS technology based on silicon wafers, it has excellent mass-producibility.

The protective cover 21 is mounted on the upper surface (+z side surface) of the substrate 6 and covers around the side surface of the mounting region and the light source 2, and is made of molded resin, for example. The protective cover 21 for the light source 2 brings the distance between the MEMS light source 2 and the AR filter 31 closer and increases the opening width of the AR filter 31 installation area for the purpose of ensuring optical strength. The protective cover 21 for the light receiver 4 corresponds to the size of the light receiver 4.

The protective cover 21 is designed to make the AR filter 31/λ selection filter 32 smaller for the purpose of cost reduction. The protective cover 21 is designed to minimize the installation area extent on the substrate 6 (minimize the external shape of the substrate 6) for the purpose of cost reduction. The protective cover 21 is also designed to provide a groove 213 described below to ensure process margins.

As shown in FIG. 5, the protective cover 21 has a recess 211, a light source hole 212, a groove 213, projections 214, a vent 215 and a cut surface 216. The recess 211 is a rectangular recess into which the AR filter 31 is attached. The height (length in the z-axis direction) of the recess 211 corresponds to the thickness of the AR filter 31. The recess 211 has the projections 214 and the vent 215 on the +y direction side.

The light source hole 212 is a hole in which the light source 2 is placed inside. The light source hole 212 is located inside the plane of the recess 211. The height (length in the z-axis direction) of the light source hole 212 is higher than the height of the light source 2.

The groove 213 is provided along the perimeter of the light source hole 212 at the bottom of the recess 211 and is a resin pool for the escape of adhesive for the AR filter 31 and for adjusting for variations in the amount of adhesive applied during the process.

The projections 214 are two protrusions protruding internally from the edge of the recess 211. The projections 214 prevent misalignment of the AR filter 31 and cause the AR filter 31 to be placed at a predetermined position in the recess 211 when the edge of the AR filter 31 is butted against the projections 214. Although the projections 214 are configured to be provided on one side of the recess 211, the projections 214 are not limited to this configuration. For example, a configuration in which the projections 214 are provided on four sides of the recess 211 is more preferable from the perspective of preventing rotational tilting of the AR filter 31.

The vent 215 is a through hole in the z-axis direction located on the +y direction side of the recess 211 and between two protrusions of the projections 214, and vented to the internal space of the light source hole 212. The vent 215 prevents the cover from floating due to the expansion of gas inside the protective cover 21 by the adhesive (epoxy resin as thermosetting resin) when the protective cover 21 is mounted on the substrate 6. The vent 215 is located inside the adhesive application area for the protective cover 21 installation on the substrate 6. The vent 215 is positioned between the two projections 214 so that it is not blocked by the AR filter 31. The vent 215 has a diameter of 0.1 [mm], for example.

The cut surface 216 is a C-plane cut formed at one end of the +x and +y direction side of the protective cover 21. The cut surface 216 serves as a reference (index) for the front, back and direction of the protective cover 21 in various types of processing during the production of the seal 20a. For example, when the protective cover 21 is fitted into a jig (tray), it is assumed that a plurality of storages are arranged in the jig. Each storage has a convex portion corresponding to the cut surface 216. Each protective cover 21 is fitted into each storage with the same front, back and direction by the cut surface 216 and the convex portion.

The adhesive 22 is an ultraviolet (UV) cured adhesive that blocks the vent 215 and tightly closes and seals the interior space containing the light source 2 in the seal 20a after the AR filter 31 is installed in the light source hole 212.

The AR filter 31 is a filter that prevents reflection of infrared rays and transmits it. The AR filter 31 has, for example, a multilayer film and a silicon substrate as a base material. The multilayer film is formed on the silicon substrate by coating, and the like, and is made of Ge, ZnS, and the like as a dielectric with a smaller refractive index than silicon. The spectral characteristics of the AR filter 31 are θ=0 [°], T(AVE) 8.5-10.0 [um] ≥ 80 [%], T(ABS) 8.0-12 [um] ≥ 50 [%], T(ABS) 1.0-6.8 [um] ≤ 1.0 [%], and T7.5 ± 0.4 [µm] = 5 [%] .

The seal 40a has the same structure as the seal 20a. In other words, the seal 40a has a structure in which the AR filter 31 and the light source 2 of the seal 20a are replaced by the λ selection filter 32 and the light receiver 4. For this reason, explanations of the protective cover and other parts of the seal 40a are omitted, and the λ selection filter 32 and the light receiver 4 are explained.

The light receiver 4 is a surface-mount component, mounted on the +z-side surface of the substrate 6, which detects the amount of light of incident infrared rays and outputs a detection signal as an analog electrical signal. The light receiver 4 is, for example, a thermopile-type light sensor (infrared sensor) with a plurality of thermocouples. However, the light receiver 4 may also be an infrared sensor of various methods shown in Table I below.

### [Table 1]

**TABLE I**

| OPERATING PRINCIPLE | | | DETECTED WAVELENGTH | ELEMENT MATERIAL |
|---|---|---|---|---|
| QUANTUM TYPE (COOLING TYPE) | EXTERNAL PHOTOELECTRIC EFFECT | PHOTOELECTRIC TUBE | ULTRAVIOLET RAYS -0.9 [µm] | CESIUM SILVER OXIDE (Ag-O-Cs) |
| | | | | GALLIUM ARSENIDE CESIUM (GaAs-Cs) |
| | INTERNAL PHOTOELECTRIC EFFECT | PHOTOCONDUCTIVE | 3-5 [µm] | CADMIUM MERCURY TELLURIDE (HgCdTe) |
| | | | | INDIUM ANTIMONIDE (InSb) |
| | | | 8-12 [µm] | CADMIUM MERCURY TELLURIDE (HgCdTe) |
| | | | | GALLIUM ARSENIDE (GaAs) |
| | | | | GALLIUM ALUMINUM ARSENIDE (AlGaAs) |
| | | | | QUANTUM WELL INFRARED DETECTOR (QWIP) |
| | | PHOTOVOLTAIC | 3-5 [µm] | PLATINUM SILICON (PrSi) |
| | | | | INDIUM ANTIMONIDE (InSb) |
| | | | 8-12 [µm] | CADMIUM MERCURY TELLURIDE (HgCdTe) |
| | | | | GERMANIUM SILICON (GeSi) |
| THERMAL TYPE (NON-COOLING TYPE) | PYROELECTRICITY EFFECT | PYROELECTRIC ELEMENT TYPE | 1-3 [µm] | LEAD SULFIDE (PbS) |
| | | | 8-12 [µm] | BARIUM STRONTIUM TITANATE (BST) |
| | | | | LEAD ZIRCONATE TITANATE (PZT) |
| | THERMOELECTRIC EFFECT | THERMOCOUPLE TYPE | | POLYCRYSTALLINE SILICON (Poly-Si) |
| | CHANGE EFFECT OF TEMPERATURE ON ELECTRICAL RESISTANCE | BOLOMETER TYPE | | VANADIUM OXIDE (VOx) |
| | | | | GIANT MAGNETORESISTANCE EFFECT (CMR) |
| | | | | YTTRIUM-BASED SUPERCONDUCTOR (YBCO) |
| | | | | AMORPHOUS SILICON (a-Si) |

The λ selection filter 32 is a filter that is provided to cover the light emitting surface of the light source 2 and transmits light (infrared rays) with a wavelength λ corresponding to the inherent absorption wavelength of the gas G as the detection target. Thus, the transmission wavelength of the λ selection filter 32 is designed to match the inherent absorption wavelength of the gas G as the detection target. This suppresses changes in light amount due to gases other than the gas G as the detection target and improves the signal-to-noise (SN) ratio of the detection signal of the light receiver 4.

The λ selection filter 32 has, for example, a silicon substrate as a base material and a dielectric multilayer film or a multilayer film made of an infrared transmitting material such as Si, Ge, sulfide and fluoride. The silicon substrate is a flat silicon substrate. However, the substrate material is not limited to silicon, but can be made of Ge (germanium), quartz, alumina, BaF2 (barium fluoride), CaF2 (calcium fluoride), and the like. The multilayer film is a multi-layered film provided on both sides of the silicon substrate. The planar shape of the λ selection filter 32 is rectangular, but is not limited to this, and may be circular or other shapes.

The λ selection filter 32 applies a long pass filter that cuts light on the shorter wavelength side than an arbitrary cutoff wavelength and transmits light including the absorption wavelength of the gas G on the longer wavelength side. The λ selection filter 32 may also be a bandpass filter that transmits light in the wavelength band that includes the absorption wavelength of the gas G.

The signal processor 5 is mounted in a flat region other than the optical cover 1 on the +z-side surface of the substrate 6 and is an AFE (Analog Front End)-IC (Integrated Circuit) as an electronic component (processor) that performs signal processing related to the detection signal of the light receiver 4. The signal processor 5 amplifies and AD converts the analog detection signal of the light receiver 4 and generates the difference value of the detection value when the light source 2 is off from the detection value when the light source 2 is on. The signal processor 5 applies corrections for temperature and individual variation of the optical gas sensor device 100a to the difference value of detection values and generates various status signals from the difference values of digital detection values. The signal processor 5 outputs the difference values of the digital detection values and the status signals.

The substrate 6 is an FR-4 (Flame Retardant Type-4) PCB (Printed Circuit Board) with conductor wiring printed on a glass epoxy resin or other board. On the +z-side surface of the substrate 6, the optical cover 1, the seals 20a and 40a, the signal processor 5, the connector 7, and the circuit element 8 are mounted. The +z-side surface of the substrate 6 and the light emitting surface of the light source 2, the AR filter 31, the λ selection filter 32 and the light receiving surface of the light receiver 4 are in a parallel relationship.

The connector 7 is mounted on a flat region other than the optical cover 1 and the signal processor 5 on the +z side surface of the substrate 6 and is used to output various digital signals output from the signal processor 5 to the information processor of later equipment (for example, an alarm). The connector 7 is connected to the information processor of the equipment via a cable with a plug.

The circuit element 8 is a switch, such as the switch 81, amplifier, chip resistor, chip capacitor, and other circuit elements. The switch 81 is an NMOSFET (N-channel Metal-Oxide-Semiconductor Field Effect Transistor) or CMOS (Complementary Metal-Oxide-Semiconductor).

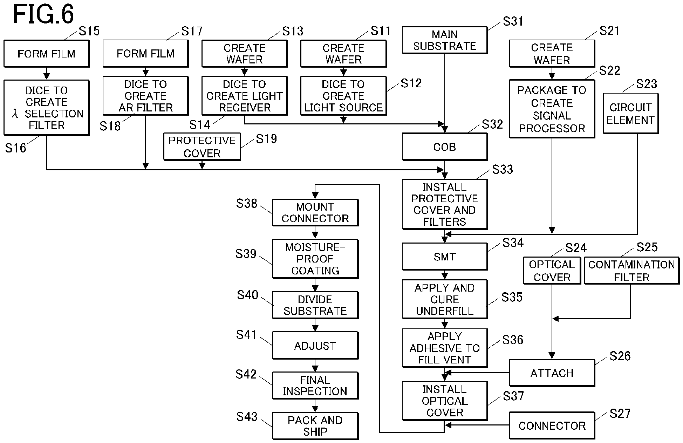

Next, the manufacturing method of the optical gas sensor device 100a is briefly described with reference to FIG. 6. FIG. 6 is a flow diagram showing the manufacturing method of the optical gas sensor device 100a of the present embodiment.

In the manufacturing method of the optical gas sensor device 100a, for simplicity of explanation, each manufacturing process for producing the optical gas sensor device 100a using various types of manufacturing devices is described.

As shown in FIG. 6, first, a main substrate designed to array a plurality of substrates 6 is created as a substrate for the optical gas sensor device 100a (step S31). In parallel with step S31, a wafer containing a plurality of light sources 2 is created (step S11). Then, the wafer created in step S11 is diced into individual pieces by a dicing device to create individual light sources 2 (step S12) .

Since the light source 2 is a membrane structure, it is preferable to apply the stealth dicing technique in step S12. This is because water from the cutting process hits the membrane and damages the membrane in a general dicing device that uses blades. Stealth dicing is a dicing method in which a laser is focused inside the workpiece to form a modified layer inside, and then a tape expander or similar device is used to separate the chips.

In parallel with step S31, a wafer containing a plurality of light receivers 4 is created (step S13). Then, the wafer created in step S13 is diced into individual pieces by a dicing device to create individual light receivers 4 (step S14). Since the light receiver 4, like the light source 2, is a membrane structure, stealth dicing technique is applied in step S14.

Next, the light sources 2 created in step S12 and the light receivers 4 created in step S14 are mounted (Chips On Board) on the main substrate created in step S31 (step S32). In step S32, the light receivers 4 and the light sources 2 are die-bonded using adhesives at the mount positions of the light receivers 4 and the light sources 2 on the substrate 6. Subsequently, the substrate 6 on which the light receivers 4 and the light sources 2 are die-bonded is heated to thermally cure the adhesive. Next, wire bonding is used to electrically connect the electrodes E1 and E2 of the light source 2 and the light receiver 4 to electrode pads 61 and 62 on the substrate 6 via gold wire, copper wire, aluminum wire, or other wire. This wire bonding can be a low-loop wire bonding to reduce the height of the light source 2 and the light receiver 4 (the seals 20a and 40a). In general wire bonding, the height from the chip surface to the highest point of the wire is as high as 150 to 180 [um] because the first bonding is done to the electrode pad on the chip. In low-loop wire bonding, the first bonding is done on the substrate side and the second bonding is done on the electrode pad on the chip, so the height of the wire in the first bonding is offset by the thickness of the chip, and the wire height on the chip can be kept low. In low-loop wire bonding, the height from the surface of the chip to the highest point of the wire, such as the light source 2 and the light receiver 4, is 100 [µm] or less.

To create the λ selection filter 32, first, a multilayer film for the λ selection filter 32 is formed and deposited on a silicon substrate (step S15). Next, the silicon substrate after film deposition created in step S15 is diced into individual pieces using a dicing device to create individual λ selection filters 32 (step S16).

To create the AR filter 31, a multilayer film for the AR filter 31 is formed on a silicon substrate and deposited (step S17). Next, the silicon substrate after film deposition created in step S17 is diced into individual pieces using a dicing device, and the like, to create individual AR filters 31 (step S18).

The protective cover 21 is created by resin molding (step S19).

Next, the protective cover 21 created in S19 and the AR filter 31 and the λ selection filter 32 created in steps S18 and S16 are installed on the main substrate (step S33). In step S33, epoxy resin is applied at predetermined positions around the light source 2 mounted on the main substrate in step S32 as an adhesive, and epoxy resin is also applied at predetermined positions around the light receiver 4. Next, the protective cover 21 is mounted at a predetermined position on the adhesive around the light source 2 and the light receiver 4. Furthermore, epoxy resin is applied to each groove 213, and the AR filter 31/λ selection filter 32 is attached to each recess 211. Then, the epoxy resin is heated to 120°C, for example, to be thermally cured, and each protective cover 21 with the AR filter 31/ λ selection filter 32 attached is mounted on the main substrate.

As for the signal processors 5, forming and wiring of elements using ordinary semiconductor integrated circuit manufacturing technology are performed to create a wafer containing a plurality of signal processors 5 (AFE-ICs) (step S21). The wafer created in step S21 is diced into individual pieces by a dicing device and packaged to create individual signal processors 5 (step S22). In this case, for example, it is possible to use WLCSP (Wafer Level Chip Size/Scale Package), in which each chip is sealed except for the electrodes in the wafer state, diced, and as a result packaged into individual pieces.

Each of the other elements such as the amplifier and the transistor that make up the circuit element 8 is prepared (step S23).

Next, the signal processor 5 of step S22 and each element constituting the circuit element 8 of step S23 are surface mounted (SMT; Surface Mount Technology) on the substrate 6 (step S34). In step S34, solder paste is printed at predetermined positions on the main substrate where the signal processor 5 and each element constituting the circuit element 8 are mounted, using a dedicated printing device. Then, the cassette is used to mount the signal processor 5 and each element constituting the circuit element 8 at predetermined positions on the main substrate, and the reflow oven heats the main substrate on which the solder paste has been printed, at max of 260°C, to solder the terminal of each element constituting the circuit element 8 and the signal processor 5 to the terminal of wiring of the main substrate.

Next, underfill (liquid curable resin) is applied to the mount portion of the signal processor 5 and the circuit element 8 and thermally cured (step S35). In step S35, the main substrate is heated at 120°C to thermally cure the underfill and protect the signal processor 5 and the circuit element 8.

Next, the adhesive 22 is applied to the vent 215 and cured by ultraviolet irradiation to fill and block the vent 215 (step S36).

On the other hand, the optical cover 1 is created by resin molding the covers 110A and 110B and integrating them by bonding or heat caulking (step S24).

Next, after creation of the contamination filter 12 (step S25), the contamination filter 12 is attached to the gas intake ports 111, 112, 113 and 114 of the optical cover 1 using adhesive or other means (step S26).

The optical cover 1 generated in step S26 is installed at a predetermined position on the main substrate by adhesion (thermosetting resin) or heat caulking (step S37).

Next, the connector 7 is created (step S27), and the connector 7 is mounted at a predetermined position on the main substrate (step S38). Then, in order to prevent moisture and insulate the substrate 6, moisture-proof coating is applied to the parent substrate on which each component is mounted in step S38. (step S39). Moisture-proof coating is a coating method in which a moisture-proof coating material (for example, HumiSeal 1B51NSLU) is applied to the substrate 6.

Next, the dicing device divides the main substrate on which each component was mounted in step S38 into individual substrates 6, and individual optical gas sensor devices 100a are created (step S40). In this case, the dicing device preferably be a dry dicer that does not use water.

For the optical gas sensor device 100a created in step S40, various adjustments are made (step S41). Then, a final inspection of the optical gas sensor device 100a adjusted in step S41 is performed (step S42). Finally, the optical gas sensor device 100a that is determined to be good in the final inspection in step S41 is packed and shipped to the destination (step S43). The optical gas sensor device 100a is manufactured by the manufacturing process described above.

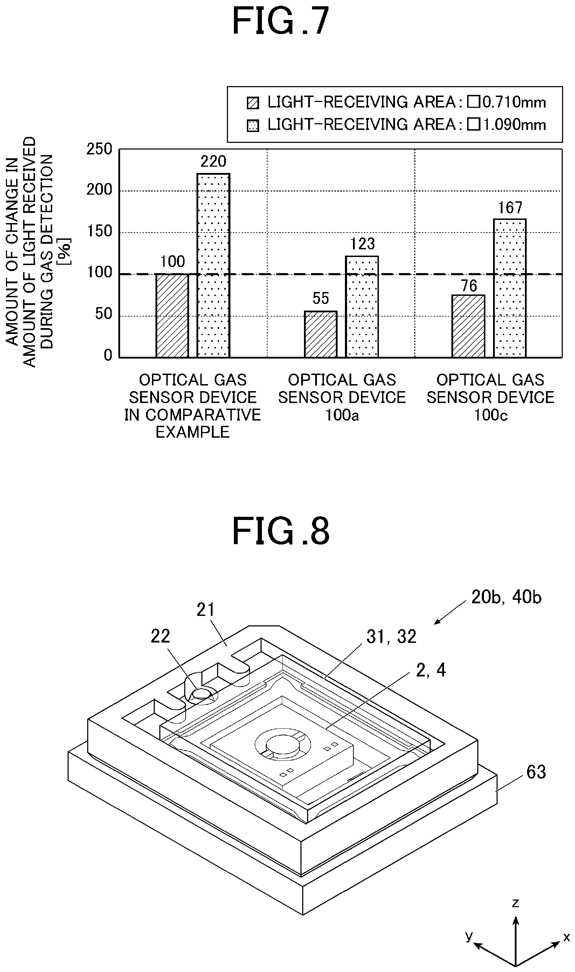

Next, the effects of the seals 20a and 40a are explained with reference to FIG. 7. FIG. 7 shows the amount of change in the amount of light received during gas detection in the optical gas sensor device in the comparative example, the optical gas sensor device 100a of the present embodiment and the optical gas sensor device 100c of the third embodiment.

As shown in FIG. 7, the optical gas sensor device in which the light source 2 and the light receiver 4 are unsealed and exposed, and the optical gas sensor device 100a in the present embodiment are used. The optical gas sensor device 100c is described below. The optical gas sensor device with the light source 2 and the light receiver 4 exposed is referred to as the "optical gas sensor device in the comparative example". In FIG. 7, two bar graphs are drawn for each optical gas sensor device. The bar graph on the left side corresponds to the size of square 0.710 [mm] of the light-receiving area of the light receiver 4. The bar graph on the right side corresponds to the size of square 1.090 [mm] of the light-receiving area of the light receiver 4.

The light source 2 is a smaller light source than the exposed light source in the comparative example because of the seal (the protective cover 21). For example, Table II below shows the light-emitting area [mm], area extent ratio of the light-emitting area (the area extent ratio of the light source in the comparative example is 1), and total amount of light emitted [W] for the exposed light source in the comparative example and the light source 2 that is downsized by the seal. Due to its miniaturization, the light source 2 also has a smaller light-emitting area, area extent ratio, and total amount of light emitted than the exposed light source in the comparative example.

### [Table 2]

**TABLE II**

| | LIGHT SOURCE IN COMPARATIVE EXAMPLE | LIGHT SOURCE 2 |
|---|---|---|
| LIGHT- EMITTING AREA [mm] | *φ* 1.5 | *φ* 1.3 |
| AREA EXTENT RATIO | 1 | 0.751 |
| TOTAL AMOUNT OF LIGHT EMITTED [W] | 1 | 0.751 |

The vertical axis of FIG. 7 shows the amount of change in amount of light received during gas detection [%] corresponding to each optical gas sensor device. The amount of change in amount of light received during gas detection [%] is the amount of change in amount of light received with, as a reference, the amount of light received during gas detection using the light receiver 4 with a light-receiving area of square 0.710 [mm] of the optical gas sensor device in the comparative example. The amount of light received (amount of change) of this reference (target value) is set to 100 [%]. The amount of change in amount of light received during gas detection [%] of the optical gas sensor device 100a also includes the effect of the miniaturization of the light source 2 described above.

By closing (sealing) the light source 2 and the light receiver 4 tight, the optical path length is extended and the optical characteristics are degraded. Therefore, the light-receiving area of the light receiver 4 is changed to secure the amount of light received, while the design of the protective cover 21 is optimized to reduce the effect of optical characteristic degradation.

In the optical gas sensor device in the comparative example, the amount of light received of the light-receiving area of square 1.090 [mm] is larger than the amount of light received of the light-receiving area of square 0.710 [mm]. The optical gas sensor device 100a includes the light receiver 4 with a light-receiving area of square 0.710 [mm]. Then, the amount of light received is reduced (55 [%]) from the amount of light received of the reference (target value) of the optical gas sensor device in the comparative example. However, in the optical gas sensor device 100a, the light receiver 4 is replaced by the light receiver 4 with a light-receiving area of square 1.090 [mm]. Then, the optical gas sensor device 100a has an increased amount of light received (123 [%]) compared to the amount of light received of the reference of the optical gas sensor device in the comparative example, which is preferable. Thus, the light-receiving area of the light receiver 4 can be adjusted to reduce the negative effects of sealing.

Table III below lists specific examples of the dimensions of the seal 20a. The seals 20b and 20c are described below.

### [Table 3]

**TABLE III**

| | SEAL 20a | SEAL 20b | SEAL 20c |
|---|---|---|---|
| DISTANCE FROM LIGHT SOURCE 2 TO BACK SURFACE OF AR FILTER 31 [mm] | 0.205 | 0.205 | 0.170 |
| DISTANCE FROM LIGHT SOURCE 2 TO ENTRANCE 131 [mm] | 0.805 | 0.805 | 0.770 |
| LIGHT SOURCE 2 CHIP SIZE / LIGHT- EMITTING AREA SIZE [mm] | □1.8/Φ1.3 | □1.8/Φ 1.3 | □2.5/Φ 1.5 |
| AR FILTER 31 EXTERNAL SIZE [mm] | 3.1 × 3.73 | 3.1 × 3.73 | 4.8 × 4.8 |
| PROTECTIVE COVER EXTERNAL SIZE [mm] | 4.5 × 5.5 | 4.5 × 5.5 | 5.0 × 5.0 |
| SUB-SUBSTRATE 63 EXTERNAL SIZE [mm] | - | 4.9 × 5.9 | - |

According to the above embodiment, the optical gas sensor device 100a includes the light source 2 that emits infrared rays to the gas G as the detection target, the AR filter 31 and the λ selection filter 32 as optical filters that transmit infrared rays, the light receiver 4 that detects the infrared rays incident through these optical filters and generates a detection signal, and the substrate 6. The optical gas sensor device 100a includes the seal 20a that seals the light source 2 with the AR filter 31 installed, and the seal 40a that seals the light receiver 4 with the λ selection filter 32 installed. The seals 20a and 40a are mounted on the substrate 6.

The seals 20a and 40a seal off the light source 2 and the light receiver 4 from the external environment, thus reducing the effects of the external environment on the light source 2 and the light receiver 4. In addition, the gas concentration of the gas G as the detection target can be accurately detected based on the detection signal.

The AR filter 31 prevents the reflection of infrared rays and transmits it. The λ selection filter 32 transmits infrared rays with a wavelength corresponding to the absorption wavelength of the gas G as the detection target. Therefore, the AR filter 31 can reduce stray light of infrared rays. The λ selection filter 32 can accurately detect the gas concentration of the gas G as the detection target based on the detection signal.

The seal 20a seals the light source 2 and the electrical connectors (wires, the electrodes E1, E2, and the like) of the light source 2. The seal 40a seals the light receiver 4 and the electrical connectors (wires, the electrodes E1, E2, electrode pads 61, 62, and the like) of the light receiver 4. This allows the electrical connectors of the light source 2 and the light receiver 4 to be shielded from external humidity and other external environments, preventing degradation of the connectors.

The seal 20a has the protective cover 21 surrounding the side surface of the light source 2. The seal 40a has the protective cover 21 enclosing the side surface of the light receiver 4. The AR filter 31 is installed in the upper surface opening of the protective cover 21 of the seal 20a. The λ selection filter 32 is installed in the opening of the upper surface in the protective cover 21 of the seal 40a. Therefore, the AR filter 31, the λ selection filter 32 and the protective cover 21 can easily seal and tightly close the light source 2 and the light receiver 4.

The protective cover 21 of the seal 20a has the vent 215 leading to the space of the light source 2. The protective cover 21 of the seal 40a has the vent 215 leading to the space of the light receiver 4. The vent 215 is blocked by the adhesive 22. Therefore, the vent 215 allows easy installation of the AR filter 31 in the seal 20a and easy installation of the λ selection filter 32 in the seal 40a. Furthermore, by blocking the vent 215 with the adhesive 22, the light source 2 and the light receiver 4 can be tightly closed and sealed.

The light source 2 and the light receiver 4 of the seals 20a and 40a are mounted directly on the substrate 6. This reduces the material cost and size of the seals 20a and 40a.

The optical gas sensor device 100a includes the optical cover 1 that directs infrared rays emitted from the light source 2 to the light receiver 4 via the gas G as the detection target. The optical cover 1 is mounted on the substrate 6. Therefore, the optical cover 1 allows more accurate detection of the gas concentration of the gas G as the detection target.

The embodiment also manufactures the optical gas sensor device 100a including the light source 2 that emits infrared rays to the gas G as the detection target, the AR filter 31 and the λ selection filter 32 as optical filters that transmit infrared rays, the light receiver 4 that detects the infrared rays incident through these optical filters and generates a detection signal, and the substrate 6. The manufacturing method of the optical gas sensor device 100a includes first mounting (step S32) that is mounting the light source 2 and the light receiver 4 on the substrate 6, and second mounting (steps S33-S36) that is mounting, on the substrate 6, the seal 20a that seals the light source 2 with the AR filter 31 installed, and the seal 40a that seals the light receiver 4 with the λ selection filter 32 installed. In the second mounting, the protective cover 21 with the vent 215 that encloses the side surface of the light source 2 and leads into the space of the light source 2 is mounted on the substrate 6, and the AR filter 31 is installed in the opening of the upper surface of the protective cover 21 to make the seal 20a. Similarly, the protective cover 21 with the vent 215 that encloses the side surface of the light receiver 4 and leads into the space of the light receiver 4 is mounted on the substrate 6, and the λ selection filter 32 is installed in the opening of the upper surface of the protective cover 21 to make the seal 40a. After heat treatment of the mounting of the light source 2, the light receiver 4 and the circuit components (the signal processor 5, the circuit element 8), the vent 215 is blocked with adhesive.

The seals 20a and 40a tightly close and seal the light source 2 and the light receiver 4, thus reducing the effects of the external environment on the light source 2 and the light receiver 4. In addition, the gas concentration of the gas G as the detection target can be accurately detected. Since the vent 215 is sealed with adhesive after the heat treatment for mounting the light source 2, the light receiver 4, and the circuit components, during the heat treatment for attaching the protective cover 21 to the substrate 6, the thermal expansion of the gas inside the protective cover 21 is mitigated by the adhesive through the vent 215, thereby preventing the cover from floating. Furthermore, since the light source 2 and the light receiver 4 are mounted directly on the substrate 6, the material cost and size of the seals 20a and 40a can be reduced.

The adhesive 22 is an ultraviolet curing resin, which does not require heat treatment, and prevents the cover from floating up due to thermal expansion of the gas inside the protective cover 21 when the adhesive 22 hardens.

The manufacturing method of the optical gas sensor device 100a includes fourth mounting (step S37) that is mounting, on the substrate 6, the optical cover 1 to guide the infrared rays emitted from the light source 2 to the light receiver 4 via the gas G as the detection target.

### (Second Embodiment)

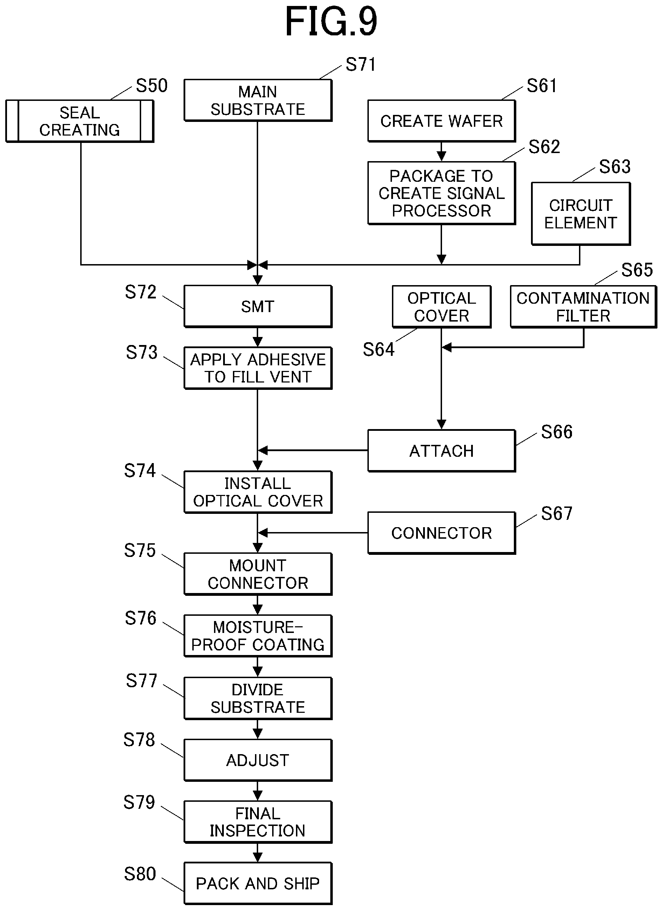

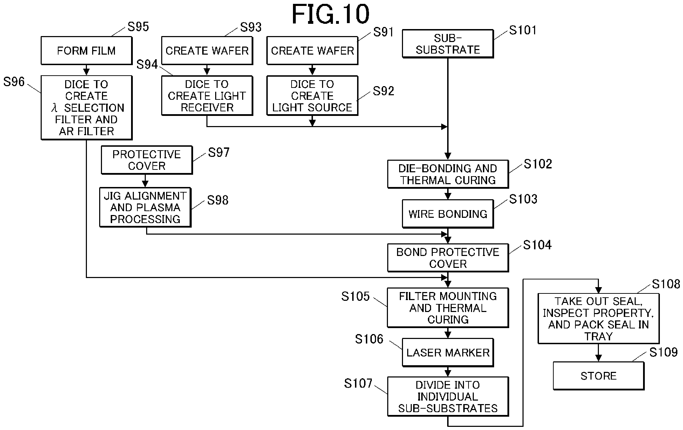

With reference to FIGS. 8 through 10, the second embodiment of the present disclosure is described. FIG. 8 is a diagrammatic view of a the seal 20b. FIG. 9 is a flow diagram showing the manufacturing method of an optical gas sensor device 100b of the present embodiment. FIG. 10 is a flow diagram showing the seal creating process of FIG. 9.

In the optical gas sensor device 100a of the first embodiment, the seals 20a and 40a were configured in which the light source 2 and the light receiver 4 are mounted directly on the substrate 6, which is the main substrate. In the present embodiment, in the seal, the light source 2 and the light receiver 4 are configured to be mounted on a sub-substrate that is different from the substrate 6.

The device configuration of the present embodiment uses an optical gas sensor device 100b in place of the optical gas sensor device 100a of the first embodiment. However, in the optical gas sensor device 100b, the same parts as in the optical gas sensor device 100a is marked with the same symbols and their description is omitted.

The optical gas sensor device 100b includes the optical cover 1, the seals 20b and 40b, the signal processor 5, the substrate 6, the connector 7 and the circuit element 8. Referring to FIG. 8, the seal 20b is described.

The seal 20b includes the light source 2, the protective cover 21, the adhesive 22, the AR filter 31 and a sub-substrate 63. The sub-substrate 63 is made of the same material as the substrate 6, but is a different substrate from the substrate 6 and is mounted on the upper surface of the substrate 6. The protective cover 21 is mounted on the sub-substrate 63. The sub-substrate 63 electrically connects the terminal that is wire-bonded with the light source 2 to the terminal of of the substrate 6, for example, by means of through holes.

The seal 40b, like the seal 20b, includes the light receiver 4, the protective cover 21, the adhesive 22, the λ selection filter 32 and the sub-substrate 63.

Next, FIG. 9 and FIG. 10 illustrate the manufacturing method of the optical gas sensor device 100b.

As shown in FIG. 9, first, a main substrate designed to have a plurality of substrates 6 arrayed is created as a substrate for the optical gas sensor device 100b (step S71). However, each substrate 6 of the main substrate created in step S71 is designed so that the seals 20b and 40b are mounted instead of the protective cover 21 in a later process.

On the other hand, the seal creating process is executed to create the seals 20b and 40b (step S50). Here, the seal creating process of step S50 is explained with reference to FIG. 10.

First, a sub-substrate designed to have a plurality of sub-substrates 63 arrayed is created as a substrate for the seals 20b and 40b (step S101). Steps S91-S94 are similar to steps S11-S14 in FIG. 6. Steps S95 and S96 are similar to steps S15-S18 in FIG. 6. Step S97 is similar to step S19 in FIG. 6.

Next, the plurality of protective covers 21 created in step S97 are placed and aligned in the storage of the jig, and plasma processing is performed on each protective cover 21 (step S98). Plasma processing is processing to clean and modify the surface of each protective cover 21 with Ar+. Plasma processing activates the surface of each protective cover 21, increasing and stabilizing the bond strength in subsequent bonding.

Next, the light source 2 created in step S92 and the light receiver 4 created in step S94 are mounted on the sub-substrate created in step S31 (step S102). In step S102, the light receiver 4 and the light source 2 are die-bonded by applying adhesive paste to the mount positions of the light receiver 4 and the light source 2 on the sub-substrate. The operator then heats the sub-substrate on which the light receiver 4 and the light source 2 are die-bonded to thermally cure the adhesive.

Next, wire bonding is used to electrically connect the electrodes E1 and E2 of the die-bonded light source 2 and light receiver 4 to the electrode pads on the sub-substrate (step S103). Subsequently, the protective cover 21, which was plasma-processed and aligned to the jig in step S98, is bonded to the sub-substrate (step S104). In step S104, epoxy resin is applied at predetermined positions around the light source 2 mounted on the sub-substrate as an adhesive, and epoxy resin is also applied at predetermined positions around the light receiver 4. Then, the protective cover 21 on the jig is bonded to the predetermined positions on the epoxy resin around the light source 2 and the light receiver 4.

Next, the AR filter 31/λ selection filter 32 is mounted in each recess 211 using a general-purpose die bonding device, and the adhesive is thermally cured (step S105). In step S105, epoxy resin is applied to each groove 213 and the AR filter 31/λ selection filter 32 is bonded to each recess 211. Heating is then performed by an oven to 120°C, for example, to thermally cure the epoxy resin, and each protective cover 21 with the AR filter 31/λ selection filter 32 attached is fixed to the sub-substrate.

Next, a laser marker is used to print a mark (for example, date of manufacture) on the back surface of the sub-substrates 63 for each seal 20b/40b for traceability (step S106). Then, a dicing device divides the sub-substrate on which each component was mounted in step S38 into individual sub-substrates 63, and the seals 20b and 40b are creased (step S107).

Next, the seals 20b and 40b are inspected (performance evaluation, good or bad judgment) and the good seals are packed in trays (step S108). In the inspection, resistance values are measured to determine whether or not the seals 20b and 40b have shorted wires when packaged. Then, the seals 20b and 40b packed in the tray are stored (step S109).

Returning to FIG. 9, steps S61-S67 are similar to steps S21-S27 in FIG. 6. The seals 20b and 40b on the tray created in step S50, the signal processor 5 created in step S62, and the circuit element 8 created in step S63 are collectively surface mounted on the main substrate created in step S71 (step S72). Steps S73 to S80 are similar to steps S36 to S43 in FIG. 6.

Specific examples of the dimensions of the seal 20b are listed in Table III.

According to the above Embodiment, the seal 20b has a sub-substrate 63 on which the light source 2 is mounted. The seal 40b has a sub-substrate 63 on which the light receiver 4 is mounted. Therefore, the seals 20b and 40b can be created and stored without mounting the light source 2 and the light receiver 4 directly on the substrate 6. Since the seals 20b and 40b are mounted on the substrate 6, the light source 2 and the light receiver 4 can be mounted indirectly and easily on the substrate 6.

The manufacturing method of the optical gas sensor device 100b includes first mounting (steps S102, S103) that is mounting the light source 2 and the light receiver 4 on the sub-substrate 63, and second mounting (steps S72, S73) that is mounting, on the sub-substrate 63, the seal 20b that seals the light source 2 with the AR filter 31 installed, and the seal 40b that seals the light receiver 4 with the λ selection filter 32 installed. In the second mounting, the protective cover 21 with the vent 215 that encloses the side surface of the light source 2 and leads into the space of the light source 2 is mounted on the sub-substrate 63, and the AR filter 31 is installed in the opening of the upper surface of the protective cover 21 to make the seal 20b. Similarly, the protective cover 21 with the vent 215 that encloses the side surface of the light receiver 4 and leads into the space of the light receiver 4 is mounted on the sub-substrate 63, and the λ selection filter 32 is installed in the opening of the upper surface of the protective cover 21 to make the seal 40b. After heat treatment of the mounting of the seals 20b and 40b and the circuit components (the signal processor 5, the circuit element 8) on the substrate 6, the vent 215 is blocked with adhesive.

Therefore, the seals 20b and 40b can be created and stored without directly mounting the light source 2 and the light receiver 4 on the substrate 6. Since the seals 20b and 40b are mounted on the substrate 6, the light source 2 and the light receiver 4 can be mounted indirectly and easily on the substrate 6. Furthermore, when the seals 20b, 40b are mounted on the substrate 6, the vent 215 is sealed with adhesive after the heat treatment for mounting. This allows the thermal expansion of the gas in the protective cover 21 to be mitigated by the vent 215 due to the thermal expansion of the gas in the protective cover 21 caused by the adhesive, thereby preventing the cover from floating.

### (Third Embodiment)

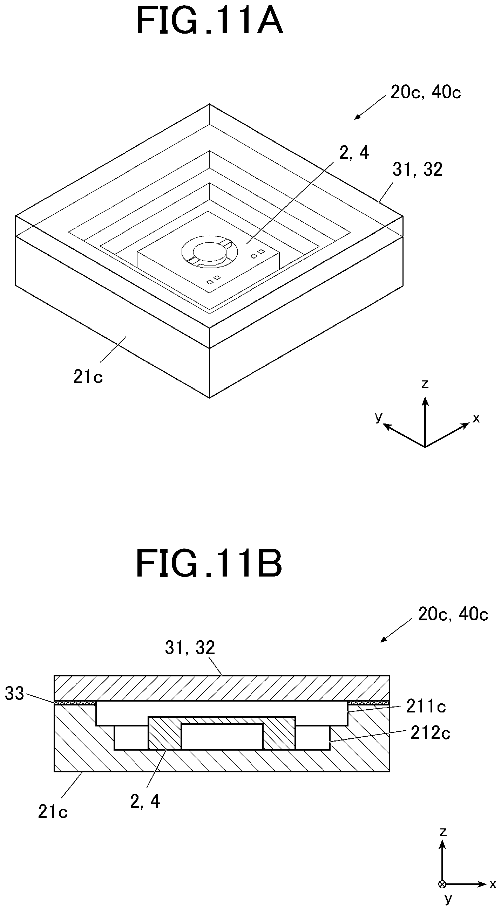

Referring to FIGS. 11A and 11B, a third embodiment of the present disclosure is described. FIG. 11A is a diagrammatic view showing a seal 20c. FIG. 11B is a cross-sectional view showing the seal 20c.

In the optical gas sensor device 100b of the second embodiment, the seals 20b and 40b have a configuration in which the protective cover 21 is made of plastic and the sub-substrate 63 corresponds to the bottom surface. In the present embodiment, in the seal, the protective cover is made of ceramic and has a bottom surface.

The device configuration of the present embodiment uses an optical gas sensor device 100c instead of the optical gas sensor device 100b of the second embodiment. However, in the optical gas sensor device 100c, the same parts as in the optical gas sensor device 100b are marked with the same symbols and their description is omitted.

The optical gas sensor device 100c includes the optical cover 1, the seals 20c and 40c, the signal processor 5, the substrate 6, the connector 7 and the circuit element 8. The seal 20c is explained with reference to FIGS. 11A and 11B.

The seal 20c includes the light source 2, a protective cover 21c, and the AR filter 31. The protective cover 21c is a cover made of ceramic that protects the light source 2 from side and bottom surfaces. The protective cover 21c is mounted on the substrate 6. The protective cover 21c has no vent compared to the protective cover 21 of the seal 20a of the first embodiment, and the AR filter 31 is mounted.

The protective cover 21c has recesses 211c and 212c. The recess 211c is a recess located on the upper surface (+z direction) side and has a rectangular opening planar shape. The recess 212c is a recess located on the lower surface (-z direction) side of the recess 211c and has an opening planform that is rectangular and smaller than the recess 211c. The recess 212c has a bottom surface. The light source 2 is mounted on the bottom surface of the recess 212c. The protective cover 21c electrically connects the terminal that is wire-bonded with the light source 2 to the terminal of the substrate 6, for example, by means of through holes.

The AR filter 31 is positioned over the entire surface of the upper surface to cover the opening of the upper surface of the protective cover 21c. The AR filter 31 is attached to the protective cover 21c by means of an adhesive 33. The adhesive 33 is an epoxy or silicone resin for hermetic sealing of the light source 2. The adhesive 33 may also be a glass frit material for sealing the light source 2, or a preform or paste of a metallic material such as AuSn or solder. In case of metallic materials, it is desirable that the protective cover 21c and the AR filter 31 to be boned are metallized with Cr/Ni/Au or Ti/Ni/Au in the adhesive area to ensure adhesion.

The seal 40c includes the light receiver 4, the protective cover 21c and the λ selection filter 32. Thus, the seal 40c has the light source 2 and the AR filter 31 of the seal 20c replaced by the light receiver 4 and the λ selection filter 32.

Next, the manufacturing method of the optical gas sensor device 100c is described. The manufacturing method of the optical gas sensor device 100c replaces the seal creating process of step S50 in FIG. 9 of the second embodiment with the creating process of the seals 20c and 40c. However, there is no step S73.

The creating process of the seal 20c is the following process. First, the protective cover 21c is created and prepared as a cavity type ceramic substrate. Next, the light source 2 is mounted (die bonding + wire bonding) on the protective cover 21c. Then, as an interpolation in case of no vent, air decompression processing (for example, vacuuming) is performed using, for example, an air intake pump, the adhesive 33 is applied to the protective cover 21c in the decompressed air (for example, vacuum), the AR filter 31 is attached and installed, and the seal 20c is created. Alternatively, the attachment is performed at a temperature higher than normal temperature (100°C or higher) according to the physical properties of the adhesive material. At this time, in order to suppress the increase in internal pressure due to the rise in temperature, the filter 31 is fixed with a heavy stone or jig so that it does not move. At this time, it is desirable to install the filter 31 at a higher temperature to reduce the load of fixing.

The creating process of the seal 40c is similar to the creating process of the seal 20c. First, the protective cover 21c is created and prepared as a cavity type ceramic substrate. Next, the light receiver 4 is mounted on the protective cover 21c. Then, the adhesive 33 is applied to the protective cover 21c, the λ selection filter 32 is attached and installed, and the seal 40c is created.

This blocks between the external environment and the surface of the light source 2 or the light receiver 4, thereby minimizing the influence of the external environment. The height (length in the z-axis direction) of the recess 212c is designed to shorten the distance between the surface of the light source 2 or the light receiver 4 and the AR filter 31 or the λ selection filter 32.

Unlike the sub-substrate method of the second embodiment (storing the seals 20b and 40b on the tray), the seals 20c and 40c are delivered (stored) in individual pieces. For this reason, the seals 20c and 40c are installed in a jig with a digging pocket in order to make them in collective substrate form in pseudo manner. In SMT of the seals 20c and 40c (corresponding to step S50 in FIG. 9), the seals 20c and 40c on the jig are surface mounted on the substrate 6.

Referring now to FIG. 7, the effect of the seals 20c and 40c of the optical gas sensor device 100c of the present embodiment is explained.

Assuming that the optical gas sensor device 100c has the light receiver 4 with a light-receiving area of square 0.710 [mm], then, the amount of light received is reduced (76 [%]) from the reference (target value) amount of light received of the optical gas sensor device in the comparative example. However, in the optical gas sensor device 100c, the above light receiver 4 is replaced by the light receiver 4 with a light-receiving area of square 1.090 [mm]. Then, the optical gas sensor device 100c has an increased amount of light received (167 [%]) than the reference amount of light received of the optical gas sensor device in the comparative example, which is preferable. Thus, the light-receiving area of the light receiver 4 can be adjusted to reduce the negative effects of sealing.

Specific examples of the dimensions of the seal 20c are listed in Table III.

According to the above Embodiment, the seal 20c has the protective cover 21c that surrounds the side surface and amount of light received he bottom surface of the light source 2. The seal 40c has the protective cover 21c enclosing the side surface and the bottom surface of the light receiver 4. The AR filter 31 is installed in the upper surface opening of the protective cover 21c of the seal 20c. The λ selection filter 32 is installed in the opening of the upper surface of the protective cover 21c of the seal 40c. This allows the seals 20c and 40c to be created and stored without mounting the light source 2 and the light receiver 4 directly on the substrate 6. In addition, the seals 20c and 40c can simplify the structure since they do not mount the sub-substrates. Also, since the seals 20c and 40c are mounted on the substrate 6, the light source 2 and the light receiver 4 can be mounted indirectly and easily on the substrate 6.

The manufacturing method of the optical gas sensor device 100c includes first mounting that is mounting the light source 2 and the light receiver 4 on the protective cover 21c, creating that is installing the AR filter 31 to the protective cover 21c, creating the seal 20c that seals the light source 2, installing the λ selection filter 32 into the protective cover 21c, and creating the seal 40c that seals the light receiver 4, and second mounting that is mounting the seals 20c and 40c on the substrate 6. In the creating, air decompression processing is performed, and in the decompressed air, the AR filter 31 is installed in the protective cover 21c, and the λ selection filter 32 is installed in the protective cover 21c.

Therefore, the seals 20c and 40c can be created and stored without directly mounting the light source 2 and the light receiver 4 on the substrate 6. In addition, since the seals 20c and 40c are mounted on the substrate 6, the light source 2 and the light receiver 4 can be mounted indirectly and easily on the substrate 6. Furthermore, since the air in the interior space of the seals 20c and 40c is decompressed, cover floating due to thermal expansion of the gas in the protective cover 21c caused by heat treatment in the preliminary stage of mounting the seals 20c and 40c on the substrate 6 can be prevented.

In the above creating, the AR filter 31 may be installed in the protective cover 21c and the λ selection filter 32 may be installed in the protective cover 21c at 100°C or higher. This method also prevents cover floating due to thermal expansion of gas in the protective cover 21c caused by heat treatment in the preliminary stage of mounting the seals 20c and 40c on the substrate 6.

### (Modification Example)

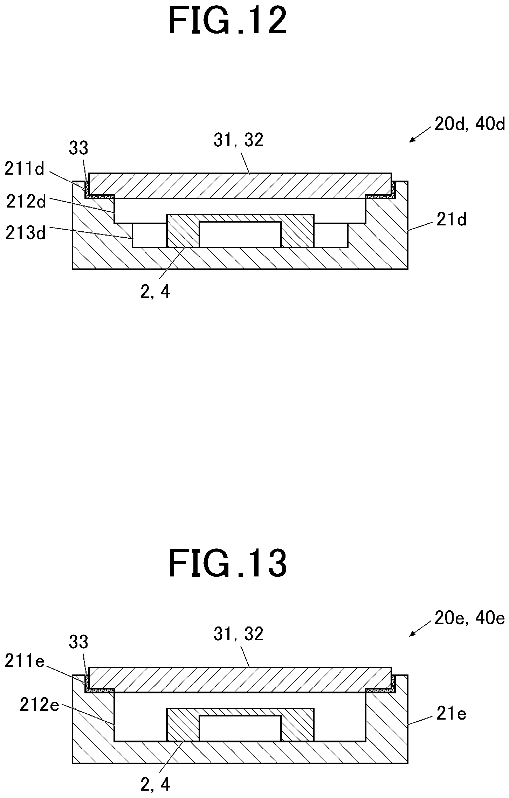

Referring to FIGS. 12 and 13, a modification example of the third embodiment above is described. FIG. 12 is a cross-sectional view showing a seal 20d. FIG. 13 is a cross-sectional view showing a seal 20e.

The optical gas sensor device 100c in the third embodiment may be configured to include the seals 20d and 40d of this modification example instead of the seals 20c and 40c. As shown in FIG. 12, the seal 20d includes the light source 2, the protective cover 21d, and the AR filter 31. The protective cover 21d, like the seal 20c, is made of ceramic and mounted on the substrate 6.

The protective cover 21d has recesses 211d, 212d, and 213d. The recess 211d is a recess located on the upper surface (+z direction) side and has a rectangular opening planar shape, corresponding to the planar shape of the AR filter 31. The recess 212d is a recess located on the lower surface (-z direction) side of the recess 211d, whose opening planar shape is rectangular and smaller than that of the recess 211d. The recess 213d is a recess located on the lower surface side of the recess 212d, with an opening planar shape that is rectangular and smaller than that of the recess 212d. The recess 213d has a bottom surface. The light source 2 is mounted on the bottom surface of the recess 212d. The protective cover 21d electrically connects the terminal that is wire-bonded with the light source 2 to the terminal of the substrate 6, for example, by means of through holes.

The seal 40d includes the light receiver 4, the protective cover 21d and the λ selection filter 32. Thus, the seal 40d has the light source 2 and the AR filter 31 of the seal 20d replaced by the light receiver 4 and the λ selection filter 32.

The creating process of the seal 20d is similar to the creating process of the seal 20c. However, when installing the AR filter 31 into the protective cover 21d, the operator installs the AR filter 31 by dropping it into the recess 211d where the adhesive 33 is applied. This configuration improves the bonding strength of the AR filter 31 by increasing the bonding area extent, improves the degree of tight closure, and simplifies the manufacturing process (the AR filter 31 can be pressed down from above to cure).

The creating process of the seal 40d is similar to the creating process of the seal 20d, and the light receiver 4 is mounted on the protective cover 21d.

The optical gas sensor device 100c of the third embodiment may be configured to include the seals 20e and 40e of this modification example instead of the seals 20c and 40c. As shown in FIG. 13, the seal 20e includes the light source 2, the protective cover 21e, and the AR filter 31. The protective cover 21e, like the seal 20c, is made of ceramic and mounted on the substrate 6.

The protective cover 21e has recesses 211e and 212e. The recess 211e is a recess located on the upper surface (+z direction) side and has a rectangular opening planar shape, corresponding to the planar shape of the AR filter 31. The recess 212e is a recess located on the lower surface (-z direction) side of the recess 211e, with an opening planar shape that is rectangular and smaller than that of the recess 211e. The recess 212e has a bottom surface. The light source 2 is mounted on the bottom surface of the recess 212e. The protective cover 21e electrically connects the terminal that is wire-bonded with the light source 2 to the terminal of the substrate 6, for example, by means of through holes.

The seal 40e includes the light receiver 4, the protective cover 21e and the λ selection filter 32. Thus, the seal 40e has the light source 2 and the AR filter 31 of the seal 20e replaced by the light receiver 4 and the λ selection filter 32.

The creating process of the seal 20e is similar to the creating process of the seal 20d. The creating process of the seal 40e is similar to the creating process of the seal 20e and the light receiver 4 is mounted on the protective cover 21e.

According to the above, the seals 20d, 40d, 20e, and 40e of this modification example have the same effect as the seals 20c and 40c of the third embodiment.

The description in the above embodiment is an example of the optical gas sensor device and the manufacturing method of the optical gas sensor device of the present disclosure, and the present disclosure is not limited to this.

For example, the gold (Au) region may be configured to be increased in the cavities (recesses) of the protective covers 21c, 21d and 21e of the third embodiment and modification example above. This configuration has the effect of increasing the amount of effective infrared rays. This is because the reflectance R [%] of gold can be 98 [%] or higher at a wavelength of 1 [um] or longer, which is the infrared region. In addition to gold, aluminum (Al), copper (Cu), silver (Ag), and the like may also be used to increase the region of the above cavities because high values of reflectance R [%] can be obtained in the infrared region.

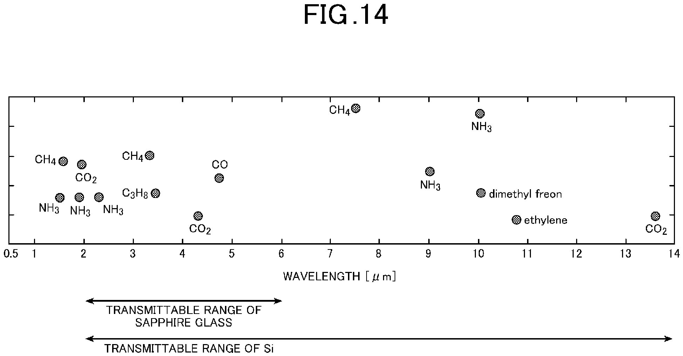

The optical gas sensor device in the above embodiments and modification examples has a configuration in which the gas G is R32 and the base material of the AR filter 31 and the λ selection filter 32 of the seal is silicon (Si). However, it is not limited to this configuration. FIG. 14 shows the absorption wavelengths [pm] of various gases and the transmittable range of sapphire glass/Si.

As shown in FIG. 14, when the gas G as the detection target is R32, the absorption wavelength of R32 is in the 9-10 [um] bandwidth. For this reason, Si, which has the bandwidth of the absorption wavelength of R32 as its transmittable range, was used as the base material of the AR filter 31 and the λ selection filter 32. For example, in the case of the gas G of a gas type with a short absorption wavelength, the use of sapphire glass as the base material of the AR filter 31 and the λ selection filter 32 improves selectivity, for example, by preventing stray light. The gas G of the gas type with the short absorption wavelength is CO₂, CH₄, and the like.

In the above embodiments and modification examples, the optical gas sensor device is configured to include one set of light source 2, AR filter 31, λ selection filter 32 and light receiver 4, but the optical gas sensor device is not limited to this. The optical gas sensor device may be configured to include a plurality of sets of light sources 2, AR filters 31, λ selection filters 32, and light receivers 4.

In the above embodiments and modification examples, the optical gas sensor device is configured in which the light source 2 and the light receiver 4 are each tightly closed to the seal, but the configuration of the light source 2 and the light receiver 4 is not limited to this. For example, either the light source 2 or the light receiver 4 may be configured to be tightly closed to the seal.

In the above mentioned seals 20a and 40a of the first embodiment and the seals 20b and 40b of the second embodiment, as well as the protective cover 21c of the third embodiment, the protective cover 21 does not have the vent 215 and, in the decompressed air, the AR filter 31 or the λ selection filter 32 may be installed by attaching it to the protective cover 21. In the seals 20c and 40c of the third embodiment and the seals 20d, 40d, 20e and 40e of the modification examples, as well as the protective cover 21 of the first embodiment, the protective covers 21c, 21d, and 21e may have a vent, the AR filter 31 or the λ selection filter 32 may be attached to the protective cover 21c, 21d, and 21e, and the vent may be filled and blocked with adhesive after heat treatment of the mounting of each element, and the like forming the circuit element 8 on the substrate 6.

Other detailed configuration and detailed operation of the optical gas sensor devices 100a, 100b and 100c in the above embodiments and modification examples may also be changed as needed without departing from the gist of the present disclosure.

According to the above-described embodiments, there is provided an optical gas sensor device that includes: a light source that emits infrared rays to a gas as a detection target; an optical filter that transmits the infrared rays; a light receiver that detects infrared rays incident via the optical filter and generates a detection signal; and a first substrate, the optical gas sensor device comprising a seal in which the optical filter is installed and which seals the light source or the light receiver, wherein the seal is mounted on the first substrate.

With this configuration, it is possible to reduce the effect of the external environment on at least one of the light source and the light receiver.

Although some embodiments of the present invention have been described and illustrated in detail, the disclosed embodiments are made for purposes of not limitation but illustration and example only. The scope of the present invention should be interpreted by terms of the appended claims.

## Claims

1. An optical gas sensor device that includes:
a light source that emits infrared rays to a gas as a detection target;
an optical filter that transmits the infrared rays;
a light receiver that detects infrared rays incident via the optical filter and generates a detection signal; and
a first substrate,
the optical gas sensor device comprising a seal in which the optical filter is installed and which seals the light source or the light receiver, wherein
the seal is mounted on the first substrate.

2. The optical gas sensor device according to claim 1, wherein the optical filter is at least one of an AR filter that prevents reflection of the infrared rays and transmits the infrared rays, or a λ selection filter that transmits infrared rays of a wavelength corresponding to an absorption wavelength of the gas as the detection target.

3. The optical gas sensor device according to claim 1, wherein the seal seals an electrical connector of the light source or the light receiver.

4. The optical gas sensor device according to claim 1, wherein
the seal includes a first protective cover that surrounds a side surface of the light source or the light receiver, and
the optical filter is installed in an opening of an upper surface of the first protective cover.

5. The optical gas sensor device according to claim 4, wherein
the first protective cover includes a vent leading to a space of the light source or the light receiver, and
the vent is blocked with an adhesive.

6. The optical gas sensor device according to claim 4, wherein the light source or the light receiver of the seal is directly mounted on the first substrate.

7. The optical gas sensor device according to claim 4, wherein
the seal includes a second substrate on which the light source or the light receiver is mounted, and
the second substrate is mounted on the first substrate.

8. The optical gas sensor device according to claim 1, wherein
the seal includes a second protective cover that surrounds a side surface and a bottom surface of the light source or the light receiver, and
the optical filter is installed in an opening of an upper surface of the second protective cover.

9. The optical gas sensor device according to any one of claims 1 to 8, further comprising an optical cover that guides the infrared rays emitted from the light source to the light receiver via the gas as the detection target, wherein
the optical cover is mounted on the first substrate.

10. A manufacturing method of an optical gas sensor device that includes:
a light source that emits infrared rays to a gas as a detection target;
an optical filter that transmits the infrared rays;
a light receiver that detects infrared rays incident via the optical filter and generates a detection signal; and
a first substrate,
the method comprising:
first mounting that is mounting the light source and the light receiver on the first substrate; and
second mounting that is mounting, on the first substrate, a seal in which the optical filter is installed and which seals the light source or the light receiver, wherein
in the second mounting, a first protective cover that surrounds a side surface of the light source or the light receiver and includes a vent leading to a space of the light source or the light receiver is mounted on the first substrate, the optical filter is installed in an opening of an upper surface of the first protective cover to create the seal, and the vent is blocked with an adhesive after heat treatment of mounting of the light source, the light receiver and a circuit component on the first substrate.

11. A manufacturing method of an optical gas sensor device that includes:
a light source that emits infrared rays to a gas as a detection target;
an optical filter that transmits the infrared rays;
a light receiver that detects infrared rays incident via the optical filter and generates a detection signal; and
a first substrate,
the method comprising:
first mounting that is mounting the light source or the light receiver on a second substrate; and
second mounting that is mounting, on the first substrate, a seal in which the optical filter is installed and which seals the light source or the light receiver, wherein
in the second mounting, a first protective cover that surrounds a side surface of the light source or the light receiver and includes a vent leading to a space of the light source or the light receiver is mounted on the second substrate, the optical filter is installed in an opening of an upper surface of the first protective cover to create the seal, and the vent is blocked with an adhesive after heat treatment of mounting of the seal and a circuit component on the first substrate.

12. The manufacturing method according to claim 10 or 11, wherein the adhesive is a UV curable resin.

13. A manufacturing method of an optical gas sensor device that includes:
a light source that emits infrared rays to a gas as a detection target;
an optical filter that transmits the infrared rays;
a light receiver that detects infrared rays incident via the optical filter and generates a detection signal; and
a first substrate,
the method comprising:
first mounting that is mounting the light source or the light receiver on a second protective cover that surrounds a side surface and a bottom surface of the light source or the light receiver;
creating that is installing the optical filter into the second protective cover to create a seal that seals the light source or the light receiver; and
second mounting that is mounting the seal on the first substrate, wherein
in the creating, air decompression is performed and the optical filter is installed into the second protective cover in decompressed air.

14. A manufacturing method of an optical gas sensor device that includes:
a light source that emits infrared rays to a gas as a detection target;
an optical filter that transmits the infrared rays;
a light receiver that detects infrared rays incident via the optical filter and generates a detection signal; and
a first substrate,
the method comprising:
first mounting that is mounting the light source or the light receiver on a second protective cover that surrounds a side surface and a bottom surface of the light source or the light receiver;
creating that is installing the optical filter into the second protective cover to create a seal that seals the light source or the light receiver; and
second mounting that is mounting the seal on the first substrate, wherein
in the creating, the optical filter is installed into the second protective cover at 100°C or higher.

15. The manufacturing method according to claim 10, 11, 13 or 14, wherein the optical filter is at least one of an AR filter that prevents reflection of the infrared rays and transmits the infrared rays, or a λ selection filter that transmits infrared rays of a wavelength corresponding to an absorption wavelength of the gas as the detection target.

16. The manufacturing method according to claim 10, 11, 13 or 14, wherein the seal seals an electrical connector of the light source or the light receiver.

17. The manufacturing method according to claim 10, 11, 13 or 14, further comprising third mounting that is mounting, on the first substrate, an optical cover that guides the infrared rays emitted from the light source to the light receiver via the gas as the detection target.
